# EUROPÄISCHE PATENTSCHRIFT

(11) **EP 4 517 213 B1**
(45) Veröffentlichungstag und Bekanntmachung des Hinweises auf die Patenterteilung: **03.12.2025**
(21) Anmeldenummer: 23193725.1
(22) Anmeldetag: 28.08.2023
(51) Int. Cl.: F24S 40/00, E04D 13/10, H02S 20/23, H02S 30/00

(54) **SCHNEERÜCKHALTER, BAUGRUPPE, UMFASSEND EINEN SCHNEERÜCKHALTER, UND VERFAHREN ZUR HERSTELLUNG EINES SCHNEERÜCKHALTERS**
SNOW GUARD, ASSEMBLY COMPRISING A SNOW GUARD, AND METHOD FOR PRODUCING A SNOW GUARD
PARE-NEIGE, ENSEMBLE COMPRENANT UN PARE-NEIGE, ET PROCÉDÉ DE FABRICATION D'UN PARE-NEIGE

(43) Veröffentlichungstag der Anmeldung: 05.03.2025
(73) Patentinhaber: Meyer BlechTechnik AG, 6022 Grosswangen (CH)
(72) Erfinder: MEYER, Urs, 6022 Grosswangen (CH)
(74) Vertreter: EGLI-EUROPEAN PATENT ATTORNEYS

(56) Entgegenhaltungen:
- EP-A1- 3 985 864
- JP-A- 2015 045 128
- JP-A- 2015 209 678
- JP-B2- 5 998 192
- US-B2- 9 175 478

## Beschreibung

Die vorliegende Erfindung bezieht sich auf einen Schneerückhalter, eine Baugruppe, umfassend einen Schneerückhalter, und ein Verfahren zur Herstellung eines Schneerückhalters.

In der vorliegenden Offenbarung werden die Begriffe "Schneefänger" und "Schneerückhalter" gleichbedeutend verwendet.

Im Stand der Technik sind Schneefänger bekannt, die in einen Spalt zwischen benachbarten Solarpanelen, die beispielsweise auf Schrägdächern angebracht sind, eingesetzt werden können. Somit können die Schneefänger verhindern, dass Schnee über die Solarpanele entlang des Daches nach unten rutscht und sich beispielsweise auf den untersten Solarpanelen akkumuliert.

JP 5998192 B2 zeigt einen Schneerückhalter, der zumindest den kennzeichnenden Teil von Anspruch 1 nicht aufweist.

Es ist bekannt, solche Schneefänger federnd, also mittels einer elastischen Vorspannkraft, zwischen die benachbarten Solarpanele einzusetzen. Schneefänger dieser Art sind beispielsweise aus der EP 3 985 864 A1 und der EP 2 672 036 A1 bekannt. In diesen Dokumenten wird ein Schneefänger offenbart, bei dem ein Schneefängerabschnitt über die Solarpanele vorsteht, während ein federnder Abschnitt in den Spalt eingesetzt wird.

Der federnde Abschnitt umfasst einen Stützabschnitt, der sich an dem einen der Solarpanele abstützt, und einen Armabschnitt, über den im eingesetzten Zustand eine elastische Vorspannkraft aufgebracht werden kann. In der EP 3 985 864 A1 ist der federnde Abschnitt in der Seitenansicht auf den Spalt N-förmig ausgebildet, wobei ein Schenkel des N als Stützabschnitt dient, und von dem sich ein Armabschnitt zu dem anderen N-Schenkel erstreckt. In Fig. 5 der EP 2 672 036 A1 ist ein Armabschnitt, an dem eine Kontaktfläche 8b vorgesehen ist, federnd an einem Stützabschnitt 6" vorgesehen, wobei sich der Armabschnitt in Einsetzrichtung auf den Stützabschnitt zu bewegt.

Jedoch ist bei den Schneefängern der oben beschriebenen Art das Einsetzen in den Spalt schwierig. So können bei der Ausgestaltung nach EP 3 985 864 A1 die parallelen N-Schenkel ein Hindernis sein. Bei der EP 2 672 036 A1 kann ein weiterer Armabschnitt 6' den Kontakt der Kontaktfläche 8b unter Umständen verhindern. Deswegen kann es nötig sein, diese Schneefänger vor dem Einsetzen mit beiden Händen zusammenzudrücken.

Ebenso ist eine Anpassung an verschiedene Spaltbreiten mit diesen Schneefängern schwierig, da die Schneefänger bei kleinen Spaltbreiten sehr stark zusammengedrückt werden müssen.

Es ist daher Aufgabe der vorliegenden Erfindung einen leicht handhabbaren Schneefänger vorzusehen, der sich weiterhin leicht an verschiedene Spaltbreiten anpassen kann.

Diese Aufgabe wird erfindungsgemäß gelöst durch einen Schneefänger nach Anspruch 1.

Gemäß einem ersten Aspekt wird ein Schneefänger zum Einsetzen in einen Spalt zwischen zwei benachbarte Solarpanele entlang einer Einsetzrichtung vorgesehen. Der Schneefänger umfasst: einen Schneefängerabschnitt, der konfiguriert ist, entgegen der Einsetzrichtung von den Solarpanelen vorzustehen; einen Stützabschnitt, der mit dem Schneefängerabschnitt gekoppelt ist und der ausgestaltet ist, sich auf einer ersten Seite in einer die Einsetzrichtung schneidenden Richtung an einem der Solarpanele abzustützen, und sich zumindest abschnittsweise in Einsetzrichtung erstreckt; einen Armabschnitt, der auf einer der ersten Seite genüberliegenden zweiten Seite des Stützabschnitts angeordnet ist und an den Stützabschnitt an einem Koppelabschnitt gekoppelt ist, um den Stützabschnitt über eine elastische Vorspannkraft an dem einen Solarpanel abzustützen, wobei der Armabschnitt einen Verjüngungsabschnitt aufweist, der entgegen der Einsetzrichtung in Bezug auf den Koppelabschnitt vorgesehen ist, und in dem sich der Armabschnitt in der Einsetzrichtung relativ auf den Stützabschnitt zu erstreckt, wobei der Verjüngungsabschnitt einen kontaktierbaren Abschnitt aufweist, in dem der Armabschnitt an einer jeweiligen Position in der Einsetzrichtung jeweils am weitesten außen auf der zweiten Seite angeordnet ist.

Von gattungsgemäßen Schneefängern insbesondere unterscheidend ist erfindungsgemäß im kontaktierbaren Abschnitt der Armabschnitt bei Projektion in Einsetzrichtung am weitesten auf der zweiten Seite angeordnet.

Dadurch lässt sich der kontaktierbare Abschnitt beispielsweise durch eine Hand von der Seite in Einsetzrichtung, auf der nicht der Schneefängerabschnitt vorgesehen ist, kontaktieren. Insbesondere ist der Kontakt von der Seite in Einsetzrichtung nicht durch andere Abschnitte behindert. Denn, da der Armabschnitt im kontaktierbaren Abschnitt so vorgesehen ist, dass er bei Projektion in Einsetzrichtung jeweils am weitesten auf der zweiten Seite angeordnet ist, gibt es in Einsetzrichtung von dem kontaktierbaren Abschnitt keine anderen Abschnitte, die weiter auf der zweiten Seite angeordnet sind. Es ist somit auch möglich, den Schneefänger in den Spalt zu schieben. Dann kann der kontaktierbare Abschnitt mit einer Seitenwand des anderen Solarpanels in Kontakt kommen, die den Armabschnitt mit einer Kontaktkraft beaufschlagt, um die elastische Vorspannkraft zu erzeugen. Dadurch lässt sich der Einsatz in den Spalt vereinfachen.

Da der kontaktierbare Abschnitt in Einsetzrichtung verjüngend ausgebildet ist, also sich der Armabschnitt relativ auf den Stützabschnitt zu erstreckt, und zudem keine weiteren Abschnitte auf der zweiten Seite vorgesehen sind, kann der Kontakt mit der Seitenwand des anderen Solarpanels für verschiedene Spaltbreiten sichergestellt werden. Somit kann der sichere Halt des Schneefängers durch die elastische Vorspannkraft bei verschiedenen Spaltbreiten sichergestellt werden. Auch kann der Schneefänger durch die verjüngende Ausbildung im kontaktierbaren Abschnitt auf einer Seite entgegengesetzt zur Einsetzrichtung von dem Koppelabschnitt einfach zusammengedrückt werden. Insbesondere kann so ein Biegemoment aufgebracht werden, beispielsweise im eingesetzten Zustand, wodurch der Stützabschnitt, der mit dem Schneefängerabschnitt gekoppelt ist, gegen das eine Solarpanel gedrückt wird, und somit kann das Eintreten von Schnee in den Spalt verhindert werden.

Als Koppelabschnitt im Sinne dieser Erfindung wird insbesondere ein Abschnitt angesehen, der ein Drehzentrum oder Verformungszentrum umfasst oder ist, um das sich der Armabschnitt bei Kraftaufbringung auf den Armabschnitt drehen oder verformen kann. Weiterhin ist der Koppelabschnitt ein Abschnitt, an dem Lasten zu dem Stützabschnitt abgetragen werden können. Er ist damit ein funktionelles Gegenstück zu einem freien Ende. Insbesondere kann am Koppelabschnitt das maximale Moment wirken, das durch Kraftaufbringung auf den Armabschnitt verursacht wird.

Vorzugsweise ist der Koppelabschnitt eine Schnittstelle zwischen Verjüngungsabschnitt und Stützabschnitt.

Der Koppelabschnitt kann demnach einfach ausgebildet werden. Somit kann die Größe des Schneefängers verkleinert werden. Zudem kann eine komplexe Verformung des Schneefängers verhindert werden.

Gemäß einem weiteren Aspekt kann der Koppelabschnitt ein Apex des kontaktierbaren Abschnitts, vorzugsweise des gesamten Schneefängers, in Einsetzrichtung sein.

Damit kann sichergestellt werden, dass sich der Armabschnitt oder andere Abschnitte des Schneefängers nicht in Einsetzrichtung über den Apex hinaus erstrecken. Dadurch kann der Einsatz in den Spalt noch einfacher erfolgen.

Der Schneefänger umfasst eine Aussparung.

Somit kann das Gewicht des Schneefängers reduziert werden. Weiterhin kann die Aussparung als Ansatzabschnitt dienen, mit dem ein Bediener seine Hand in Eingriff bringen kann, um beispielsweise den Schneefänger in den Spalt zu schieben.

Die Aussparung ist im Schneefängerabschnitt ausgebildet.

Demnach kann die Aussparung auf einer Seite entgegen der Einsetzrichtung vorgesehen werden, was den Einsatz erleichtert. Zudem kann verhindert werden, dass ein Kontakt des Armabschnitts oder des Stützabschnitts mit den Solarpanelen beeinträchtigt wird.

Der Armabschnitt ist so konfiguriert, dass er zumindest in einem Zustand elastischer Verformung durch die Aussparung verläuft.

Somit kann die Aussparung als Aufnahmeabschnitt dienen, in den der Armabschnitt bei Verformung oder Bewegung eindringen kann, ohne die Verformung oder Bewegung des Armabschnitts zu behindern. Dies ermöglicht einen Einsatz bei sehr kleinen Spaltbreiten.

Vorzugsweise ist die Aussparung in einem Wandabschnitt ausgebildet, und zumindest ein weiterer Wandabschnitt ist mit der Aussparung in einer Erstreckungsrichtung der Aussparung zumindest teilweise überlappend vorgesehen.

Somit kann selbst in einem Fall, in dem die Aussparung im Schneefängerabschnitt vorgesehen ist, die Funktion als Schneefänger sichergestellt werden, indem die Aussparung von dem weiteren Wandabschnitt in der Erstreckungsrichtung der Aussparung überlappt wird.

Gemäß noch einem weiteren Aspekt kann der Schneefängerabschnitt zumindest einen Schneefängervorsprungsabschnitt aufweisen, der zur ersten Seite vorsteht, wobei der Schneefängervorsprungsabschnitt vorzugsweise einer von zumindest zwei in einer die Einsetzrichtung schneidenden Richtung überlappenden Wandabschnitten ist.

Somit kann das Eintreten von Schnee in den Spalt durch den Schneefängervorsprungsabschnitt verhindert werden. Durch die zwei Wandabschnitte kann der Widerstand dem Schnee gegenüber erhöht werden, da der Schnee zumindest zwei Barrieren überwinden muss. Die Funktionalität des Schneefängers kann somit erhöht werden.

Gemäß noch einem weiteren Aspekt kann der Armabschnitt im kontaktierbaren Abschnitt eine dem anderen Solarpanel zugewandte konvex geformte Seite aufweisen.

Dadurch kann der Kontakt mit dem anderen Solarpanel sichergestellt und die Kontaktfläche erhöht werden.

Gemäß noch einem weiteren Aspekt kann der Armabschnitt zumindest einen Vorsprungsabschnitt aufweisen, der zur zweiten Seite vorsteht, vorzugsweise mehrere Vorsprungsabschnitte entlang einer Erstreckungsrichtung des Armabschnitts aufweisen.

Auch durch den Vorsprungsabschnitt kann der Kontakt mit dem anderen Solarpanel sichergestellt werden. Mehrere Vorsprungsabschnitte können die Kontaktfläche erhöhen und machen eine bessere Anpassung an verschiedene Spaltbreiten möglich.

Vorzugsweise steht der zumindest eine Vorsprungsabschnitt entgegen der Einsetzrichtung zur zweiten Seite vor.

Dadurch kann der Einsatz erleichtert werden.

Vorzugsweise weist der zumindest eine Vorsprungsabschnitt einen vergrößerten Oberflächenabschnitt auf.

Dadurch kann die kontaktierende Oberfläche erhöht werden und der Halt des Schneefängers im Spalt sichergestellt werden.

Gemäß noch einem weiteren Aspekt kann der Stützabschnitt auf der ersten Seite eine planar geformte Oberfläche aufweisen.

Somit kann an dem Stützabschnitt eine große Kontaktfläche mit der Seitenwand des einen Solarpanels sichergestellt werden. Die planar geformte Oberfläche überlappt vorzugsweise in der die Einsetzrichtung schneidenden Richtung den Koppelabschnitt.

Gemäß noch einem weiteren Aspekt können zumindest der Armabschnitt und der Stützabschnitt, vorzugsweise der gesamte Schneefänger, aus einem Blechteil geformt sein.

Dadurch können der Armabschnitt und der Stützabschnitt einfach hergestellt werden. Ferner können die Kosten reduziert werden. Weiterhin kann der Armabschnitt zur Ausbildung des kontaktierbaren Abschnitts aus dem Blechteil gebogen werden. Somit kann die Elastizität für die Rückstellkraft/Vorspannkraft sichergestellt werden.

Ein weiterer Aspekt sieht eine Baugruppe vor, die umfasst: zwei benachbarte Solarpanele, zwischen denen ein Spalt ausgebildet ist; und den Schneefänger nach zumindest einem der vorangehenden Ansprüche, wobei der Schneefänger in den Spalt eingesetzt ist.

Somit kann eine Baugruppe bereitgestellt werden, in der der Schneefänger einfach vorgesehen werden kann. Der Schnee kann somit davon abgehalten werden, auf benachbarte Solarpanele zu rutschen.

Vorzugsweise kontaktiert der Armabschnitt das andere Solarpanel in dem kontaktierbaren Abschnitt oder entgegen der Einsetzrichtung davon.

Der Stützabschnitt kontaktiert das eine Solarpanel vorzugsweise auf einer Seite entgegengesetzt zur Einsetzrichtung von dem Koppelabschnitt.

Somit kann die elastische Vorspannkraft zuverlässig auf die Solarpanele aufgebracht werden.

Ein weiterer Aspekt sieht ein Verfahren zum Herstellen eines Schneefängers nach einem der obigen Aspekte vor, umfassend die Schritte: Schneiden eines ebenen Blechteils aus einem Blech; und Biegen des Blechteils zu dem Schneefänger.

Durch dieses Verfahren lässt sich der Schneefänger kostengünstig und einfach herstellen. Aufgrund der Ausgestaltung des kontaktierbaren Abschnitts lässt sich dieser besonders einfach durch Biegen herstellen.

Die vorliegende Erfindung wird im Folgenden unter Bezugnahme auf die beigefügten Zeichnungen detaillierter beschrieben.
Fig.1 zeigt eine perspektivische Darstellung eines erfindungsgemäßen Schneefängers.
Figuren 2 a), b), und c) zeigen eine Seitenansicht des erfindungsgemäßen Schneefängers, jeweils für verschiedene Spaltbreiten.
Fig. 3 zeigt ein geschnittenes Blechteil, aus dem der erfindungsgemäße Schneefänger durch Biegen geformt werden kann.

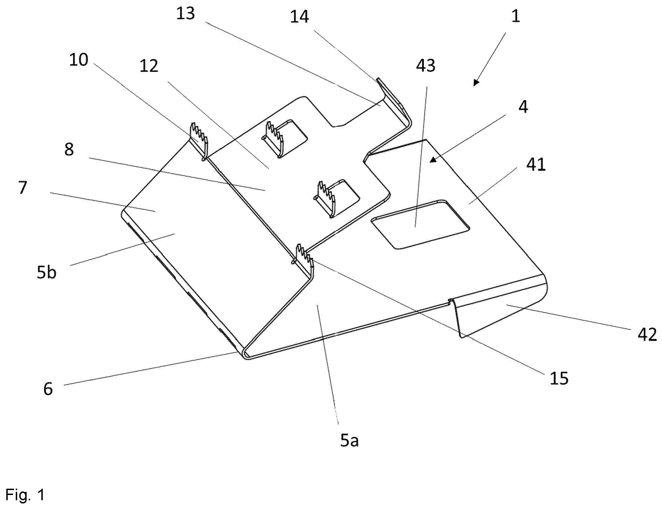

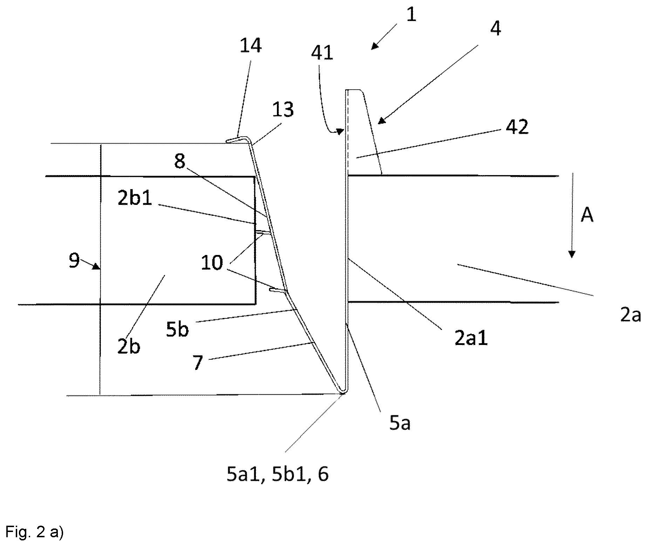

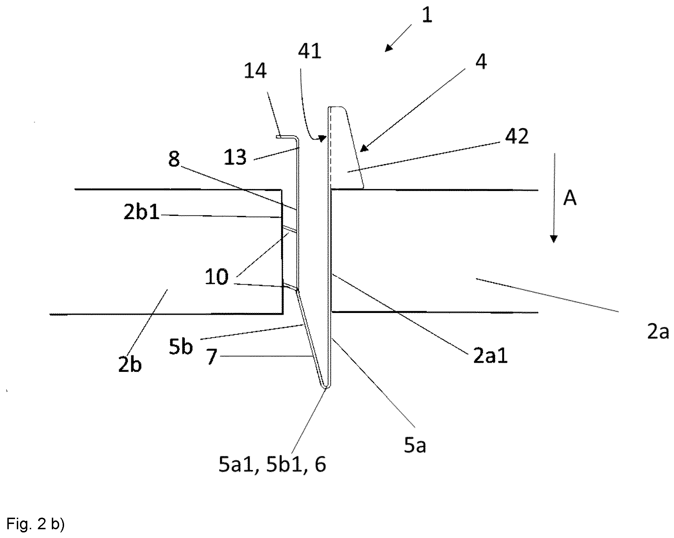

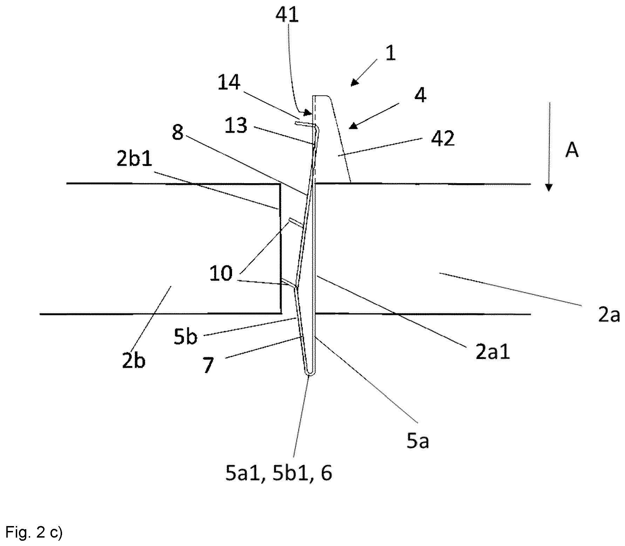

Fig. 1 und Figuren 2 a), b), und c) zeigen jeweils den Schneefänger 1. Wie in Fig. 2 gezeigt, ist der Schneefänger 1 in einen Spalt zwischen zwei benachbarten Solarpanelen 2a und 2b eingesetzt. Die Solarpanele 2a und 2b sind hier so gezeigt, dass ihre obere Wand horizontal ausgerichtet ist. Die obere Wand ist jeweils die Funktionsseite der Solarpanele 2a und 2b, also die Seite, auf die die Sonne einstrahlt. Unter der oberen Wand sind beispielsweise Photovoltaikzellen angeordnet.

Es ist zu beachten, dass die horizontale Ausrichtung aus Darstellungsgründen gewählt ist. Die Solarpanele 2a und 2b können jedoch auf einem Schrägdach angebracht sein. Dann ist die obere Wand jeweils parallel zu einer Neigungsebene des Daches ausgerichtet. Das Solarpanel 2a ist hier das eine Solarpanel und zugleich das auf dem Schrägdach höher gelegene Solarpanel, während das Solarpanel 2b das andere Solarpanel ist und zugleich tiefer gelegen ist.

Der Spalt wird durch jeweils dem Spalt zugewandte, im Wesentlichen parallele Seitenwände 2a1 und 2b1 der Solarpanele 2a und 2b definiert. Die Spaltbreitenrichtung verläuft parallel zur Neigungsebene des Daches sowie parallel zur Anordnungsrichtung der Solarpanele 2a und 2b entlang der Neigung des Daches und senkrecht zu den jeweiligen Seitenwänden 2a1 und 2b1. Die Spaltlängsrichtung verläuft ebenfalls parallel zur Neigungsebene, aber senkrecht zur Anordnungsrichtung der Solarpanele 2a und 2b, und parallel zu den jeweiligen Seitenwänden 2a1 und 2b1. Die Spalttiefenrichtung verläuft senkrecht zur Neigungsebene des Daches und parallel zu den jeweiligen Seitenwänden 2a1 und 2b1.

Die Spalttiefenrichtung ist parallel zu einer Einsetzrichtung A des Schneefängers 1.

Bei den Seitenansichten aus Fig. 2 verläuft die Blickrichtung entlang der Spaltlängsrichtung. Die folgende geometrische Beschreibung bezieht sich auf einen natürlichen gebogenen Zustand (uneingesetzt), obwohl die Darstellungen in Fig. 2 den eingesetzten Zustand zeigen.

Wie in Figuren 1 und 2 zu sehen, weist der Schneefänger 1 einen Schneefängerabschnitt 4 auf, der im eingesetzten Zustand (Figuren 2a), b) und c)) über die obere Wand der Solarpanele 2a und 2b entgegen der Einsetzrichtung vorsteht, um das Rutschen von Schnee über den Spalt zu verhindern. Der Schneefängerabschnitt 4 weist einen Schneefängerhauptabschnitt 41 auf. Der Schneefängerhauptabschnitt 41 ist im Wesentlichen planar ausgebildet, und seine Erstreckungsebene verläuft im Wesentlichen parallel zu Seitenwand 2a1 und zur Einsetzrichtung A. An gegenüberliegenden Endabschnitten, insbesondere Enden, des Schneefängerhauptabschnitts 41 in Spaltlängsrichtung sind jeweils von einander in Spaltlängsrichtung beabstandete Schneefängervorsprungsabschnitte 42 vorgesehen, die von einer Oberfläche auf der Seite des Solarpanels 2a (eine erste Seite) zur Seite des Solarpanels 2a vorstehen. Im eingesetzten Zustand schlägt ein Endabschnitt der Schneefängervorsprungsabschnitte 42 in Einsetzrichtung A gegen die obere Wand des Solarpanels 2a an, und definiert somit dessen Position in Einsetzrichtung.

Im Schneefängerhauptabschnitt 41 ist eine Aussparung 43 ausgebildet, die hier als Durchgangsöffnung ausgebildet ist, die den Schneefängerhauptabschnitt 41 durchdringt. Die Aussparung 43 erstreckt sich in Spaltbreitenrichtung und durchdringt in dieser Richtung. Die Aussparung 43 weist eine rechteckige Form auf. Ein Ende in Einsetzrichtung der Aussparung 43 ist im Wesentlichen an der gleichen Position in Einsetzrichtung angeordnet wie der Endabschnitt der Schneefängervorsprungsabschnitte 42, kann aber auch entgegen der Einsetzrichtung dazu verschoben sein. Zur Kenntnis zu nehmen ist, dass die Aussparung 43 nicht am Rand des Schneefängerhauptabschnitts 41 in Spaltlängsrichtung vorgesehen ist, sondern im Inneren.

Der Schneefänger 1 weist somit einen Führungsabschnitt auf, der ausgestaltet ist, den Schnee auf den Schneefängerhauptabschnitt 41 zu zu führen, insbesondere auf die Aussparung 43, und hier durch die beabstandeten Schneefängervorsprungsabschnitte 42 gebildet wird.

In Einsetzrichtung A schließt sich an den Schneefängerabschnitt 4 ein Stützabschnitt 5a an. Der Stützabschnitt 5a ist integral, insbesondere monolithisch, mit dem Schneefängerabschnitt 4 ausgebildet. Eine Erstreckungsebene des Stützabschnitts 5a verläuft im Wesentlichen parallel zur Einsetzrichtung A und zur Seitenwand 2a1, sodass sich der Stützabschnitt im Wesentlichen in Einsetzrichtung A erstreckt. Der Stützabschnitt 5a hat ebenfalls im Wesentlichen eine planare Gestalt auf beiden Seiten, ist also vorzugsweise plattenförmig ausgebildet. Er verläuft insbesondere in derselben Ebene wie der Schneefängerhauptabschnitt 41. Insbesondere die dem Solarpanel 2a zugewandte Oberfläche (auf der ersten Seite) ist planar geformt. Der Stützabschnitt 5a stützt sich mit der Oberfläche auf der ersten Seite vorzugsweise durch Flächenkontakt an dem Solarpanel 2a ab, wie in Fig. 2 zu sehen.

Der Stützabschnitt 5a ist integral, insbesondere monolithisch, mit einem Armabschnitt 5b ausgebildet. Der Armabschnitt 5b wird durch Biegung eines Blechteils gebildet, das auch den Stützabschnitt 5a formt. Der Armabschnitt 5b ist auf einer der ersten Seite gegenüberliegenden Seite des Solarpanels 2b (auf einer zweiten Seite) angeordnet. Er erstreckt sich mit zumindest einer Komponente senkrecht zur Einsetzrichtung zur zweiten Seite. Im natürlichen, gebogenen Zustand (also nicht eingesetzter Zustand) kann ein Neigungswinkel zwischen 30° und 60° (inklusive) liegen, vorzugsweise zwischen 40° und 50° liegen (inklusive), nochmals bevorzugt 45° sein. Der Neigungswinkel wird durch die Tangenten an die jeweiligen Erstreckungsebenen des Armabschnitts 5b und des Stützabschnitts 5a an der Biegekante definiert.

Ein Endabschnitt 5a1 des Stützabschnitts 5a in Einsetzrichtung trifft auf einen Endabschnitt 5b1 des Armabschnitts 5b in Einsetzrichtung A und formt dadurch den Koppelabschnitt 6. Der Koppelabschnitt kann die Biegeebene des Blechteils umfassen. Somit wird der Koppelabschnitt 6 als eine Schnittstelle aus Stützabschnitt 5a und Armabschnitt 5b gebildet.

Der Stützabschnitt 5a erstreckt sich zumindest abschnittsweise, vorzugsweise vollständig, auf einer Seite entgegen der Einsetzrichtung von dem Koppelabschnitt 6. Zur Kenntnis zu nehmen ist, dass in Fig. 2 der Stützabschnitt 5a das Solarpanel auf einer Seite entgegen der Einsetzrichtung von dem Koppelabschnitt 6 kontaktiert, insbesondere in einem Abschnitt, der von dem Koppelabschnitt 6 entgegen der Einsetzrichtung beabstandet ist. Wie bereits erwähnt, weist der Schneefänger 1 einen Anschlag auf, der die Position in Einsetzrichtung im eingesetzten Zustand definiert und hier durch die Schneefängervorsprungsabschnitte 42 gebildet wird. Der Anschlag ist so ausgestaltet, dass der Koppelabschnitt in Einsetzrichtung von einem Endabschnitt in Einsetzrichtung der Seitenwand 2a vorsteht.

Der Koppelabschnitt 6 stellt einen globalen Apex in Einsetzrichtung A des Schneefängers 1 dar.

Mit anderen Worten erstreckt sich der Armabschnitt 5b entgegen der Einsetzrichtung A relativ weg vom Stützabschnitt 5a. Dies entspricht einer Erstreckung aufeinander zu entlang der Einsetzrichtung A.

Der Armabschnitt 5b weist zwei Abschnitte unterschiedlicher Neigung 7 und 8 auf, die kontinuierlich zueinander vorgesehen sind und jeweils planar ausgebildet sind. Der erste Abschnitt unterschiedlicher Neigung 7 befindet sich in Einsetzrichtung A vom zweiten Abschnitt unterschiedlicher Neigung 8, also auf der Seite des Koppelabschnitts 6. Der Neigungswinkel des zweiten Abschnitts unterschiedlicher Neigung 8 weist einen geringeren Neigungswinkel in Bezug auf den Stützabschnitt 5a auf als der erste Abschnitt unterschiedlicher Neigung 7. Somit wird die Seite/Oberfläche, die dem Solarpanel 2b zugewandt ist, konvex ausgebildet.

Der Armabschnitt 5b erstreckt bzw. neigt sich monoton, vorzugsweise streng monoton, auf den Stützabschnitt 5a entlang der Einsetzrichtung A zu. Somit wird ein Verjüngungsabschnitt gebildet.

Der Verjüngungsabschnitt umfasst einen kontaktierbaren Abschnitt 9.

Der Verjüngungsabschnitt und der kontaktierbare Abschnitt 9 zeichnen sich dadurch aus, dass sich in diesem der Armabschnitt relativ auf den Stützabschnitt 5a zu erstreckt, wie oben beschrieben, vorzugsweise monoton, insbesondere streng monoton, in Einsetzrichtung A. Der kontaktierbare Abschnitt 9 ist also verjüngend in Einsetzrichtung A, vorzugsweise monoton, insbesondere streng monoton ausgebildet.

Der kontaktierbare Abschnitt 9 ist auf der Seite entgegen der Einsetzrichtung von dem Koppelabschnitt 6 vorgesehen.

Im kontaktierbaren Abschnitt 9 ist der Armabschnitt 5b an zumindest einer jeweiligen Position in Einsetzrichtung A, vorzugsweise an mehreren, insbesondere kontinuierlichen Positionen, am weitesten auf der zweiten Seite angeordnet. Mit anderen Worten ist die dem Solarpanel 2b zugewandte Seite, an der jeweiligen Position in Einsetzrichtung A (im jeweiligen Schnitt senkrecht zur Einsetzrichtung) am nächsten zu besagtem Solarpanel 2b, sodass kein weiterer Abschnitt zwischen Solarpanel 2b und Armabschnitt 5b angeordnet ist. Diese Bedingung ist fast im gesamten Armabschnitt 5b entlang der Einsetzrichtung erfüllt, bis auf den Bereich, in dem ein später beschriebener Ansatzabschnitt 14 zurück in Einsetzrichtung A gebogen ist. Somit ist dieser Bereich nicht Teil des kontaktierbaren Abschnitts.

Mit anderen Worten wird durch Außenseite des Armabschnitts 5b und die Außenseite des Stützabschnitts 5a die maximale Abmessung in der Spaltbreitenrichtung an dieser Position in Einsetzrichtung definiert.

Zuletzt ist der Armabschnitt 5b im kontaktierbaren Abschnitt 9 weiter zur zweiten Seite (Seite des Solarpanels 2b) angeordnet als andere Abschnitte in Einsetzrichtung in Bezug auf den kontaktierbaren Abschnitt 9. Mit anderen Worten ist der Armabschnitt 5b selbst bei Projektion aus dem kontaktierbaren Abschnitt 9 in Einsetzrichtung immer am weitesten zur zweiten Seite gelegen.

Da im vorliegenden Fall eine streng monotone Verjüngung bis zum Apex vorliegt, gibt es überhaupt keine anderen Abschnitte, die weiter zur zweiten Seite angeordnet sind als der Armabschnitt 5b im kontaktierbaren Abschnitt 9. Somit erstreckt sich der kontaktierbare Abschnitt bis zum Apex.

Allerdings ist es auch möglich, dass beispielsweise der Armabschnitt 5b am Koppelabschnitt 6 in Einsetzrichtung A zur zweiten Seite rückgefaltet wird. Dann würde sich der kontaktierbare Abschnitt in Einsetzrichtung nicht bis zum Koppelabschnitt 6 erstrecken, sondern nur bis an die Position in Einsetzrichtung A, an der der Armabschnitt 5b eine Position in Spaltbreitenrichtung erreicht, die der am weitesten zur zweiten Seite liegenden Position in Spaltbreitenrichtung auf der Seite in Einsetzrichtung von dem Koppelabschnitt 6 entspricht.

Weiterhin sind am Armabschnitt 5b zu beiden Seiten in Breitenrichtung des Schneefängers 1, also in Spaltlängsrichtung, Vorsprungsabschnitte 10 vorgesehen. Die Vorsprungsabschnitte 10 sind nicht nur paarweise in Spaltlängsrichtung, sondern auch in Intervallen entlang der Erstreckungsrichtung des Armabschnitts 5b bzw. Einsetzrichtung A vorgesehen. Die Vorsprungsabschnitte 10 sind insbesondere im Bereich des zweiten Abschnitts unterschiedlicher Neigung 8 vorgesehen. Die Vorsprungsabschnitte 10 stehen nach außen (zum Solarpanel 5b) vor. Vorzugsweise stehen sie zur zweiten Seite und entgegen der Einsetzrichtung A vor. Die Vorsprungsabschnitte 10 weisen an ihrem äußeren Ende jeweils vergrößerte Oberflächenabschnitte 15 (siehe Fig. 1) auf. Die vergrößerten Oberflächenabschnitte können beispielsweise geriffelt ausgeführt sein.

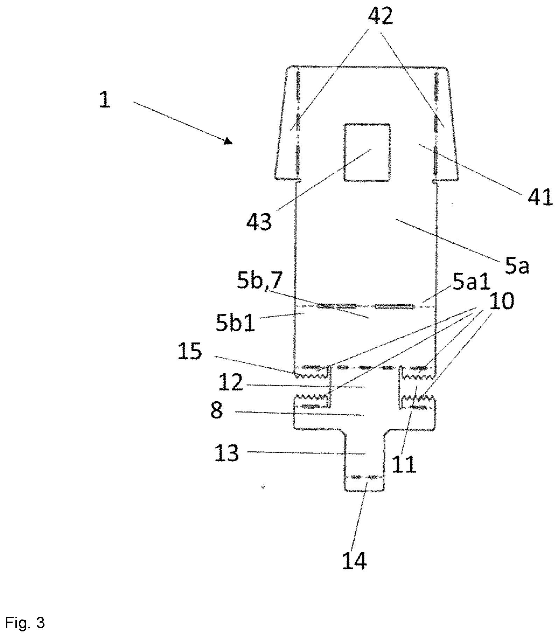

Wie in Fig. 3 zu sehen ist, sind am Blechteil Ausschnitte 11 quer zur Erstreckungsrichtung des Armabschnitts 5b ausgebildet, sodass an dieser Stelle ein Steg 12 mit reduzierter Breite ausgebildet wird. Weitere Einschnitte in Erstreckungsrichtung des Armabschnitts 5b setzen die Vorsprungsabschnitte 10 vom Steg 12 ab, und erlauben so das Formen der Vorsprungsabschnitte 10 durch Biegen. In Fig. 1 ist ebenfalls der Steg 12 mit reduzierter Breite zu sehen, allerdings sind dort die Vorsprungsabschnitte 10, die sich in Erstreckungsrichtung weiter weg vom Koppelabschnitt befinden, im Gegensatz zu Fig. 3, im Inneren in Breitenrichtung des Schneefängers 1 vorgesehen, sodass dort ein weiterer Ausschnitt vorgesehen ist, um die Vorsprungsabschnitte 10 zu bilden. In Fig. 1 sind die Vorsprungsabschnitte also an unterschiedlichen Positionen in Breitenrichtung entlang der Erstreckungsrichtung angeordnet.

Weiterhin ist am Endabschnitt 13 des Armabschnitts 5b der Ansatzabschnitt 14 ausgebildet, der zur zweiten Seite vorsteht. Der Ansatzabschnitt 14 kann in oder gegen Einsetzrichtung A nach außen vorstehen. Wie hier weist der Endabschnitt 13 vorzugsweise eine reduzierte Breite gegenüber dem restlichen Armabschnitt 5b auf.

Funktionen und Wirkungen der vorliegenden Erfindung werden nun beschrieben.

Wie oben beschrieben, weist der Verjüngungsabschnitt den kontaktierbaren Abschnitt 9 auf. Mit anderen Worten erstreckt sich im kontaktierbaren Abschnitt 9 der Armabschnitt 5b in Einsetzrichtung relativ auf den Stützabschnitt zu. Zudem befinden sich der Verjüngungsabschnitt und der kontaktierbare Abschnitt 9 auf der Seite entgegen der Einsetzrichtung von dem Koppelabschnitt 6.

Somit kann der Schneefänger 1 einfach auf der Seite entgegen der Einsetzrichtung von Koppelabschnitt 6 zusammengedrückt (der Armabschnitt 5b wird weiter auf den Stützabschnitt 5a zu bewegt) werden, um die elastische Vorspannkraft auszuüben. Die elastische Kraft wird über den Koppelabschnitt 6 an den Stützabschnitt 5a übertragen, um diesen am Solarpanel 2a abzustützen. Bezüglich des Koppelabschnitts 6 wirkt ein Biegemoment, das den Stützabschnitt 5a gegen das Solarpanel 2a drücken kann. So stützt sich der Stützabschnitt 5a zumindest abschnittsweise auf einer Seite entgegen der Einsetzrichtung von dem Koppelabschnitt, vorzugsweise durch Flächenkontakt, auf der ersten Seite ab.

Da der kontaktierbare Abschnitt 9 weiterhin so ausgestaltet ist, dass der Armabschnitt 5b darin in einem jeweiligen Schnitt senkrecht zur Einsetzrichtung am weitesten zur zweiten Seite gelegen ist, und selbst bei Projektion von jedem Schnitt senkrecht zur Einsetzrichtung in Einsetzrichtung die am weitesten zur zweiten Seite gelegenen Abschnitte des Schneefängers 1 sind, kann der kontaktierbare Abschnitt 9 leicht von der Seite in Einsetzrichtung A kontaktiert werden. So kann beispielsweise das Solarpanel 2b mit dem kontaktierbaren Abschnitt 9 beim Einsetzen in Kontakt kommen.

Weiterhin kann mit dieser Ausgestaltung eine Adaption an verschiedene Spaltbreiten erzielt werden.

So zeigt Fig. 2 a) beispielsweise den Zustand, in dem eine Spaltbreite 22 mm beträgt, während Fig. 2 b) den Zustand bei einer Spaltbreite von beispielsweise 12 mm und Fig. 2 c) den Zustand bei einer Spaltbreite von 8 mm) zeigt.

Die elastische Verformung, insbesondere Verbiegung, des Armabschnitts 5b nimmt im eingesetzten Zustand mit reduzierter Spaltbreite zu, wobei sich die elastische Verformung durch das Einsetzen selbst erzielen lässt, ohne dass ein Bediener den Schneefänger 1 selbst mit seinen Händen verstärkt zusammendrücken muss. Zur Kenntnis zu nehmen ist, dass der Stützabschnitt hier im Wesentlichen nicht verbogen wird.

Weiterhin ist der Koppelabschnitt 6 als Schnittstelle von Verjüngungsabschnitt und Stützabschnitt ausgebildet. Somit kann eine komplexe Verformung des Schneefängers verhindert werden, und die Größe klein gehalten werden. Weiterhin kann der Schneefänger so einfach durch Biegen hergestellt werden.

Zudem ist der Koppelabschnitt 6 ein Apex des kontaktierbaren Abschnitts 9 und des gesamten Schneefängers in Einsetzrichtung. Somit lässt sich der Schneefänger 1 besonders leicht in den Spalt einsetzen.

Durch die Aussparung 43 im Schneefängerabschnitt 4 kann auf besonders einfache Weise ein Ansatzabschnitt gebildet werden, der die Handhabung erleichtert. Weiterhin sei auf Fig. 2 c) verwiesen. Wie darin zu sehen, verläuft der Armabschnitt 5b (dessen Endabschnitt 13), also zumindest ein Teil des Schneefängers 1, in zumindest einem Zustand elastischer Verformung durch die Aussparung 43. Somit kann eine noch größere Adaption an verschiedene Spaltbreiten erfolgen, ohne die Konfiguration komplex zu machen.

Der Schneefängerabschnitt 4 weist zumindest einen Schneefängervorsprungsabschnitt 42 auf, der zur ersten Seite des Solarpanels 2a vorsteht, insbesondere über den Stützabschnitt 5a.

Der Armabschnitt 5b ist auf der dem Solarpanel 2b zugewandten Seite durch die Abschnitte unterschiedlicher Neigung 7 und 8 im kontaktierbaren Abschnitt 9 konvex geformt. Somit kann zuverlässig ein Kontakt des Schneefängers 1 mit den Solarpanelen 2a und 2b sichergestellt werden, und eine Adaption an verschiedene Spaltbreiten erzielt werden.

Der Armabschnitt 5b weist weiterhin die Vorsprungsabschnitte 10 im kontaktierbaren Abschnitt 9 auf. Somit kann ebenfalls die Kontaktsicherheit erhöht werden. Zudem erlauben die Vorsprungsabschnitte 10, wie insbesondere in Fig. 2 c) zu sehen ist, eine Einstellung der elastischen Verformung.

Die vergrößerten Oberflächenabschnitte 15 an den Vorsprungsabschnitten 10 erlauben eine Erhöhung der Kontaktfläche und eine stabile Kontaktierung.

Weiterhin ist die Oberfläche des Stützabschnitts 5a auf der Seite des Solarpanels 2a (erste Seite) planar ausgebildet. Insbesondere erstreckt sich die planare Oberfläche auf Seiten des Solarpanels 2a parallel zur Einsetzrichtung A. Somit kann eine große Kontaktfläche geschaffen werden. Das Solarpanel 2a kann somit in Flächenkontakt mit dem Stützabschnitt 5a gebracht werden.

Es ist zur Kenntnis zu nehmen, dass im Ausführungsbeispiels sowohl der Stützabschnitt als auch der Armabschnitt plattenförmig, also mit jeweils planaren Oberflächen zu beiden Seiten, ausgestaltet sind. Somit erstreckt sich der Stützabschnitt 5a parallel zur Einsetzrichtung, während der Armabschnitt unter dem oben genannten Neigungswinkel dazu verlaufen kann.

Der gesamte Schneefänger 1 ist hier aus einem Blechteil, insbesondere durch Biegen, geformt. Das macht die Herstellung einfach.

Der Schneefänger kann beispielsweise aus einem Material gefertigt sein, das Aluminium oder Stahl, insbesondere Edelstahl, umfasst, vorzugsweise davon gebildet wird. Dies gilt insbesondere für die Ausbildung aus einem Blechteil.

Der Stützabschnitt 5a und der Armabschnitt haben jeweils vorzugsweise dieselbe Wandstärke (in Spaltbreitenrichtung) und/oder eine Wandstärke von wenigen Millimetern, vorzugsweise weniger als 5 mm, nochmals bevorzugt weniger als 2 mm.

Der Stützabschnitt und der Armabschnitt sind vorzugsweise zumindest im kontaktierbaren Abschnitt 9 jeweils symmetrisch bezüglich einer Ebene senkrecht zur Spaltlängsrichtung (Breitenrichtung des Schneefängers 1), insbesondere bezüglich derselben Ebene. Dadurch kann ein Kippen oder Verdrehen des Schneefängers unterbunden werden.

Schließlich sei nochmals auf Fig. 3 zur Erläuterung des Herstellungsverfahrens verwiesen. Fig. 3 zeigt ein Blechteil, das dem abgewickelten Schneefänger aus den Figuren 1 und 2 entspricht, also im Zustand vor dem Biegen.

Das Blechteil wird zunächst aus einem Blechbogen geschnitten, beispielsweise durch Laserschneiden und/oder Stanzen, vorzugsweise computergesteuert. Wie in Fig. 3 zu sehen, werden dabei auch die Ausschnitte 11 und Einschnitte für die Vorsprungsabschnitte 10 ausgebildet. Vorzugsweise werden dabei weitere Ausschnitte, beispielsweise durch Stanzen, erzeugt, die mit den späteren Biegekanten überlappen.

Zudem werden an dem geschnittenen Blechteil die vergrößerten Oberflächenabschnitte 15 beispielsweise durch Umformen oder ebenfalls durch Schneiden ausgebildet.

Es ist zur Kenntnis zu nehmen, dass die Einschnitte, Ausschnitte und die Aussparung 43 vor dem Schneiden der Außengeometrie erzeugt werden können.

Anschließend wird das Blechteil aus Fig. 3 zu dem Schneefänger 1 gebogen. Dazu kann eine Biegepresse verwendet werden.

Vorzugsweise werden zunächst die Vorsprungsabschnitte 10 und/oder die Schneefängervorsprungsabschnitte 42 und/oder der Ansatzabschnitt 14 gebogen, bevor der Armabschnitt und der Stützabschnitt gebogen werden.

Abwandlungen der obigen Ausführungsform werden im Folgenden beschrieben.

Während die elastische Vorspannkraft oben im Wesentlichen durch Verformung, insbesondere Biegung, des Armabschnitts 5b erzeugt wird, kann auch der Stützabschnitt elastisch verformt werden. Dazu verläuft insbesondere der Stützabschnitt nicht parallel zur Einsetzrichtung.

Es ist auch möglich, als Koppelabschnitt ein Gelenk vorzusehen, um das sich der Stützabschnitt und der Armabschnitt relativ drehen können. Dann kann eine Feder, beispielsweise eine Drehfeder, verwendet werden, um die elastische Vorspannkraft zu erzeugen.

Der Koppelabschnitt muss nicht die Schnittstelle des Verjüngungsabschnitts und des Stützabschnitts sein. Es kann vielmehr ein sich in Spaltbreitenrichtung erstreckender Abschnitt vorgesehen sein, an dessen beiden Enden jeweils der Armabschnitt und der Stützabschnitt ankoppeln.

Die Aussparung 43 muss in nicht erfindungsgemäßen Beispielen nicht vorgesehen werden, oder kann auch an anderer Stelle vorgesehen werden. Die Aussparung kann auch als Sackloch ausgeführt sein.

In der Ausführungsform werden die Schneefängervorsprungsabschnitte 42 durch rechtwinkliges Biegen an einer Biegekante in Erstreckungsrichtung des Stützabschnitts (Einsetzrichtung) erhalten. Der Winkel kann aber auch kleiner als 90° sein. So kann sich der Schneefängervorsprungsabschnitt so erstrecken, dass er mit der Aussparung 43 in Erstreckungsrichtung der Aussparung 43 (also in einer Richtung senkrecht zur Einsetzrichtung, in Spaltbreitenrichtung) überlappt. Auf diese Weise kann die Aussparung 43 in einem Wandabschnitt (Schneefängerhauptabschnitt 41) ausgebildet sein, und der Schneefängervorsprungsabschnitt ist ein weiterer überlappender Wandabschnitt.

Der Schneefängervorsprungsabschnitt kann aber auch durch Biegen um den oberen Endabschnitt (Biegekante in Breitenrichtung des Schneefängers) des Schneefängerhauptabschnitts 41 ausgebildet werden, wobei der Schneefängervorsprungsabschnitt vorzugsweise in Einsetzrichtung zurückgefaltet wird. Auch auf diese Weise kann eine Überlappung erzeugt werden, und der Schneefängervorsprungsabschnitt als Anschlag dienen.

Der Schneefänger, insbesondere der kontaktierbare Abschnitt und der Stützabschnitt, kann zumindest auf den den Solarpanelen zugewandten Seiten oberflächenbeschichtet sein. Beispielsweise kann auf der Außenseite des Stützabschnitts und des kontaktierbaren Abschnitts eine Folie angebracht sein, die abtragbar ist, beispielsweise durch Kontakt mit den Solarpanelen.

Der Armabschnitt und der Stützabschnitt müssen nicht plattenförmig ausgestaltet sein. Auch komplexere Querschnittsformen sind denkbar.

Ebenso ist der Stützabschnitt als Platte ausgebildet, die parallel zur Einsetzrichtung verläuft. Jedoch kann sie dazu auch geneigt sein, beispielsweise so, dass sie in Einsetzrichtung zur zweiten Seite verläuft. Der Stützabschnitt kann auch mehrere zurückgefaltete Abschnitte in der Seitenansicht aufweisen, beispielsweise N-förmig ausgebildet sein.

In der Baugruppe muss das Solarpanel den Armabschnitt nicht im kontaktierbaren Abschnitt kontaktieren. Es kann diesen auch in einem Abschnitt entgegen der Einsetzrichtung davon kontaktieren, beispielsweise in einem Abschnitt, in dem sich der Armabschnitt parallel zum Stützabschnitt erstreckt.

Zur Kenntnis zu nehmen ist, dass mehrere Schneefänger 1 in Spaltlängsrichtung, vorzugsweise voneinander beabstandet, vorgesehen werden können. Auch können mehrere Solarpanele in Spaltlängsrichtung in jeweiliger Reihe mit den Solarpanelen 2a und 2b vorgesehen werden, wobei in jedem gebildeten Spalt, zumindest ein Schneefänger eingeklemmt werden kann.

In der vorliegenden Offenbarung umfassen Mindestangaben sowohl die spezifizierte Menge als auch die jeweilige Gesamtheit. Das Fehlen von Mindestangaben bedeutet nicht, dass nur die spezifizierte Menge vorgesehen werden muss.

## Patentansprüche

1. Ein Schneerückhalter (1) zum Einsetzen in einen Spalt (3) zwischen zwei benachbarte Solarpanele (2a, 2b) entlang einer Einsetzrichtung (A), umfassend:
einen Schneefängerabschnitt (4), der konfiguriert ist, entgegen der Einsetzrichtung (A) von den Solarpanelen (2a, 2b) vorzustehen;
einen Stützabschnitt (5a), der mit dem Schneefängerabschnitt (4) gekoppelt ist und der ausgestaltet ist, sich auf einer ersten Seite in einer die Einsetzrichtung (A) schneidenden Richtung an einem (2a) der Solarpanele abzustützen, und sich zumindest abschnittsweise in Einsetzrichtung (A) erstreckt;
einen Armabschnitt (5b), der auf einer der ersten Seite gegenüberliegenden zweiten Seite des Stützabschnitts (5a) angeordnet ist und an den Stützabschnitt (5a) an einem Koppelabschnitt (6) gekoppelt ist, um den Stützabschnitt (5a) über eine elastische Vorspannkraft an dem einen Solarpanel (2a) abzustützen, wobei der Armabschnitt (5b) einen Verjüngungsabschnitt aufweist, der entgegen der Einsetzrichtung (A) in Bezug auf den Koppelabschnitt (6) vorgesehen ist, und in dem sich der Armabschnitt (5b) in der Einsetzrichtung (A) relativ auf den Stützabschnitt (5a) zu erstreckt,
wobei der Verjüngungsabschnitt einen kontaktierbaren Abschnitt (9) aufweist, in dem der Armabschnitt (5b) an einer jeweiligen Position in der Einsetzrichtung (A) jeweils am weitesten außen auf der zweiten Seite angeordnet ist, wobei
im kontaktierbaren Abschnitt (9) der Armabschnitt (5b) bei Projektion in Einsetzrichtung (A) am weitesten auf der zweiten Seite angeordnet ist, **dadurch gekennzeichnet, dass** der Schneerückhalter (1) eine Aussparung (43) umfasst,
wobei die Aussparung (43) im Schneefängerabschnitt (4) ausgebildet ist, und
der Armabschnitt (5b) so konfiguriert ist, dass er zumindest in einem Zustand elastischer Verformung durch die Aussparung verläuft.

2. Der Schneerückhalter (1) nach Anspruch 1, wobei der Koppelabschnitt (6) eine Schnittstelle zwischen Verjüngungsabschnitt und Stützabschnitt (5a) ist.

3. Der Schneerückhalter (1) nach Anspruch 1 oder 2, wobei der Koppelabschnitt (6) ein Apex des kontaktierbaren Abschnitts (9), vorzugsweise des gesamten Schneerückhalters (1), in Einsetzrichtung (A) ist.

4. Der Schneerückhalter (1) nach zumindest einem der Ansprüche 1 bis 3, wobei die Aussparung (43) in einem Wandabschnitt ausgebildet ist, und zumindest ein weiterer Wandabschnitt mit der Aussparung in einer Erstreckungsrichtung der Aussparung (43) zumindest teilweise überlappend vorgesehen ist.

5. Der Schneerückhalter (1) nach zumindest einem der vorangehenden Ansprüche, wobei der Schneefängerabschnitt (4) zumindest einen Schneefängervorsprungsabschnitt (42) aufweist, der zur ersten Seite vorsteht, wobei der Schneefängervorsprungsabschnitt (42) vorzugsweise einer von zumindest zwei in einer die Einsetzrichtung (A) schneidenden Richtung überlappenden Wandabschnitten ist.

6. Der Schneerückhalter (1) nach zumindest einem der vorangehenden Ansprüche, wobei der Armabschnitt (5b) im kontaktierbaren Abschnitt (9) eine dem anderen Solarpanel (2b) zugewandte konvex geformte Seite aufweist.

7. Der Schneerückhalter (1) nach zumindest einem der vorangehenden Ansprüche, wobei der Armabschnitt (5b) zumindest einen Vorsprungsabschnitt (10) aufweist, der zur zweiten Seite vorsteht, vorzugsweise mehrere Vorsprungsabschnitte (10) entlang einer Erstreckungsrichtung des Armabschnitts (5b) aufweist.

8. Der Schneerückhalter (1) nach Anspruch 7, wobei der zumindest eine Vorsprungsabschnitt (10) einen vergrößerten Oberflächenabschnitt (15) aufweist.

9. Der Schneerückhalter (1) nach zumindest einem der vorangehenden Ansprüche, wobei der Stützabschnitt (5a) auf der ersten Seite eine planar geformte Oberfläche aufweist.

10. Der Schneerückhalter (1) nach zumindest einem der vorangehenden Ansprüche, wobei zumindest der Armabschnitt (5b) und der Stützabschnitt (5a), vorzugsweise der gesamte Schneerückhalter (1), aus einem Blechteil geformt sind.

11. Baugruppe, umfassend:
zwei benachbarte Solarpanele (2a, 2b), zwischen denen ein Spalt (3) ausgebildet ist;
und den Schneerückhalter (1) nach zumindest einem der vorangehenden Ansprüche,
wobei der Schneerückhalter (1) in den Spalt (3) eingesetzt ist, und vorzugsweise der Armabschnitt (5b) das andere Solarpanel (2b) in dem kontaktierbaren Abschnitt (9) oder entgegen der Einsetzrichtung (A) davon kontaktiert.

12. Verfahren zum Herstellen eines Schneerückhalters (1) nach einem der Ansprüche 1 bis 10, umfassend die Schritte:
Schneiden eines ebenen Blechteils aus einem Blech; und
Biegen des Blechteils zu dem Schneerückhalter (1).

## Claims

1. A snow retainer (1) for insertion into a gap (3) between two adjacent solar panels (2a, 2b) along a direction of insertion (A), comprising:
a snow guard section (4) configured to project from the solar panels (2a, 2b) against the direction of insertion (A) ;
a support section (5a) which is coupled with the snow guard section (4), and which is designed to support itself on a first side in a direction intersecting the direction of insertion (A) on one (2a) of the solar panels and extends at least in sections in the direction of insertion (A);
an arm section (5b) which is arranged on a second side of the support section (5a) opposite the first side and is coupled to the support section (5a) at a coupling section (6) in order to support the support section (5a) by means of an elastic pre-tensioning force on the one solar panel (2a), wherein the arm section (5b) has a tapered section which is provided against the direction of insertion (A) with respect to the coupling section (6), and in which the arm section (5b) extends in the direction of insertion (A) relative to the support section (5a),
wherein the tapered section has a contactable section (9) in which the arm section (5b) is arranged at a respective position in the direction of insertion (A) on the second side located the furthest outside, wherein, in the contactable section (9), the arm section (5b) is positioned furthest on the second side when projected in the direction of insertion (A), **characterized in that** the snow retainer (1) comprises a recess (43),
wherein the recess (43) is formed in the snow guard section (4), and the arm section (5b) is configured in such a way that it passes through the recess at least in a state of elastic deformation.

2. The snow retainer (1) according to Claim 1, wherein coupling section (6) is an interface between the tapered section and the support section (5a).

3. The snow retainer (1) according to Claim 1 or 2, wherein the coupling section (6) is an apex of the contactable section (9), preferably of the entire snow retainer (1), in the direction of insertion (A).

4. The snow retainer (1) according to at least one of the Claims 1 to 3, wherein the recess (43) is formed in a wall section, and at least one further wall section is provided with the recess in an extension direction of the recess (43) at least partially overlapping.

5. The snow retainer (1) according to at least one of the preceding claims, wherein the snow guard section (4) comprises at least one snow guard projecting section (42) projecting towards the first side, wherein the snow guard projecting section (42) is preferably one of at least two wall sections overlapping in a direction intersecting the direction of insertion (A).

6. The snow retainer (1) according to at least one of the preceding claims, wherein the arm section (5b) in the contactable section (9) comprises a convex side facing the other solar panel (2b).

7. The snow retainer (1) according to at least one of the preceding claims, wherein the arm section (5b) comprises at least one projecting section (10) that projects towards the second side, preferably comprises a plurality of projecting sections (10) along one direction of extension of the arm section (5b).

8. The snow retainer (1) according to Claim 7, wherein at least one projecting section (10) comprises an enlarged surface section (15).

9. The snow retainer (1) according to at least one of the preceding claims, wherein the support section (5a) comprises a planar shaped surface on the first side.

10. The snow retainer (1) according to at least one of the preceding claims, wherein at least the arm section (5b) and the support section (5a), preferably the entire snow retainer (1), are formed from a sheet metal part.

11. Assembly, comprising:
two adjacent solar panels (2a, 2b), between which a gap (3) is formed;
and the snow retainer (1) according to at least one of the preceding claims,
wherein the snow retainer (1) is inserted into the gap (3), and preferably the arm section (5b) contacts the other solar panel (2b) in the contactable section (9) or against the direction of insertion (A) of it.

12. A method for manufacturing a snow retainer (1) according to any one of the Claims 1 to 10, comprising the steps: cutting a flat sheet metal part from a sheet metal; and bending the sheet metal part into the snow retainer (1).

## Revendications

1. Dispositif de retenue de neige (1) destiné à être inséré dans une fente (3) entre deux panneaux solaires (2a, 2b) adjacents le long d'une direction d'insertion (A), comportant :
une section de récupération de neige (4) configurée pour faire saillie à l'opposé de la direction d'insertion (A) à partir des panneaux solaires (2a, 2b) ;
une section d'appui (5a) accouplé à la section de récupération de neige (4) et configurée pour s'appuyer sur l'un (2a) des panneaux solaires sur un premier côté dans une direction coupant la direction d'insertion (A), et s'étendant au moins par sections dans la direction d'insertion (A) ;
une section de bras (5b) disposée sur un deuxième côté de la section d'appui (5a) opposé au premier côté et accouplée à la section d'appui (5a) au niveau d'une section d'accouplement (6), pour l'appui de la section d'appui (5a) sur le panneau solaire (2a) par le biais d'une force de précontrainte élastique, dans lequel la section de bras (5b) présente une section conique prévue à l'opposé de la direction d'insertion (A) par rapport à la section d'accouplement (6), et dans laquelle la section de bras (5b) s'étend vers la section d'appui (5a) dans la direction d'insertion (A),
dans lequel la section conique présente une section de mise en contact (9), dans laquelle la section de bras (5b) est disposée respectivement le plus à l'extérieur sur le deuxième côté à une position relative dans la direction d'insertion (A), dans lequel
dans la section de mise en contact (9), la section de bras (5b) est disposée le plus loin sur le deuxième côté lors de la projection dans la direction d'insertion (A), **caractérisé en ce que** le dispositif de retenue de neige (1) comporte une cavité (43),
dans lequel la cavité (43) est réalisée dans la section de récupération de neige (4), et
la section de bras (5b) est configurée de manière à s'étendre à travers la cavité au moins dans un état de déformation élastique.

2. Dispositif de retenue de neige (1) selon la revendication 1, dans lequel la section d'accouplement (6) est une interface entre la section conique et la section d'appui (5a).

3. Dispositif de retenue de neige (1) selon la revendication 1 ou 2, dans lequel la section d'accouplement (6) est un sommet de la section de mise en contact (9), de préférence de l'ensemble du dispositif de retenue de neige (1), dans la direction d'insertion (A).

4. Dispositif de retenue de neige (1) selon l'une au moins des revendications 1 à 3, dans lequel la cavité (43) est réalisée dans une section de paroi, et au moins une autre section de paroi est prévue de manière à chevaucher au moins partiellement la cavité dans une direction d'extension de la cavité (43).

5. Dispositif de retenue de neige (1) selon l'une au moins des revendications précédentes, dans lequel la section de récupération de neige (4) présente au moins une section en saillie de récupération de neige (42), laquelle fait saillie vers le premier côté, dans lequel la section en saillie de récupération de neige (42) est de préférence l'une parmi au moins deux sections de parois se chevauchant dans une direction coupant la direction d'insertion (A).

6. Dispositif de retenue de neige (1) selon l'une au moins des revendications précédentes, dans lequel la section de bras (5b) présente, dans la section de mise en contact (9), un côté formé de façon convexe, tourné vers l'autre panneau solaire (2b).

7. Dispositif de retenue de neige (1) selon l'une au moins des revendications précédentes, dans lequel la section de bras (5b) présente au moins une section en saillie (10), laquelle fait saillie vers le deuxième côté, de préférence plusieurs sections en saillie (10) le long d'une direction d'extension de la section de bras (5b).

8. Dispositif de retenue de neige (1) selon la revendication 7, dans lequel l'au moins une section en saillie (10) présente une section de surface agrandie (15).

9. Dispositif de retenue de neige (1) selon l'une au moins des revendications précédentes, dans lequel la section d'appui (5a) présente une surface formée de façon planaire sur le premier côté.

10. Dispositif de retenue de neige (1) selon l'une au moins des revendications précédentes, dans lequel au moins la section de bras (5b) et la section d'appui (5a), de préférence l'ensemble du dispositif de retenue de neige (1), sont formés à partir d'une pièce de tôle.

11. Groupe de construction comportant :
deux panneaux solaires (2a, 2b) adjacents, entre lesquels est réalisée une fente (3) ;
et le dispositif de retenue de neige (1) selon l'une au moins des revendications précédentes,
dans lequel le dispositif de retenue de neige (1) est inséré dans la fente (3), et la section de bras (5b) entre de préférence en contact avec l'autre panneau solaire (2b) dans la section de mise en contact (9) ou contre la direction d'insertion (A).

12. Procédé de fabrication d'un dispositif de retenue de neige (1) selon l'une des revendications 1 à 10, comportant les étapes suivantes :
découpe d'une pièce de tôle plate à partir d'une tôle ;
et
flexion de la pièce de tôle pour former le dispositif de retenue de neige (1).
